Europäisches Patentamt

European Patent Office

Office européen des brevets

(19)

(11) Publication number: **0 018 339**
**B1**

(12) **EUROPEAN PATENT SPECIFICATION**

(45) Date of publication of patent specification: **01.08.84**      (51) Int. Cl.³: **C 01 F 7/74**

(21) Application number: **80850050.8**

(22) Date of filing: **10.04.80**

(54) A method of producing an aluminium-sulphate solution.

(30) Priority: **11.04.79 SE 7903250**

(43) Date of publication of application:
**29.10.80 Bulletin 80/22**

(45) Publication of the grant of the patent:
**01.08.84 Bulletin 84/31**

(84) Designated Contracting States:
**AT CH DE FR GB IT LI NL SE**

(56) References cited:
**DE - A - 1 767 106**
**DE - C - 383 435**
**DE - C - 543 875**
**DE - C - 1 026 283**
**SE - C - 212 899**
**US - A - 3 226 188**

(73) Proprietor: **Boliden Aktiebolag**
**Box 5508**
**S-114 85 Stockholm (SE)**

(72) Inventor: **Nilsson, Rolf Olof**
**Ransviksvägen 14**
**S-260 42 Mölle (SE)**
Inventor: **Schön, Gunnar Tore Lennart**
**Viskgatan 38**
**S-252 47 Helsingborg (SE)**
Inventor: **Holmkvist, Kerstin Severina**
**Ymersgatan 5**
**S-252 32 Helsingborg (SE)**
Inventor: **Persson, Jan-Erik**
**Runristargatan 46**
**S-253 68 Helsingborg (SE)**

(74) Representative: **Lundin, Björn-Eric**
**Boliden Aktiebolag Box 5508**
**S-114 85 Stockholm (SE)**

Courier Press, Leamington Spa, England.

## Description

The present invention relates to a method of producing an aluminium sulphate solution, in which a raw material containing aluminium hydroxide, particularly a product from the Bayer process or bauxite, is admixed with an aqueous sulphuric acid solution while digesting the raw material and forming an aluminium-sulphate solution.

When producing aluminium sulphate from sulphuric acid and aluminium hydroxide or raw materials containing aluminium hydroxide, e.g. products from the Bayer process or bauxite, an aqueous sulphuric acid mixture is normally caused to react with the aluminium hydroxide or the raw material, hereinafter referred to as the aluminium-hydroxide material, in a batch-wise process. This method is normally referred to within the field as digesting. The resulting solution is then in a subsequent step converted to a solid aluminium sulphate product using a solidification process. An example of prior art digesting methods is disclosed in SE—C—212899. If pure aluminium hydroxide obtained, for example, from a conventional Bayer process is used, the resultant aluminium sulphate, $Al_2(SO_4)_3 \cdot 14$—$15 H_2O$, will be free from iron and water-insoluble materials. If instead there is used, e.g. bauxite which contains iron oxide and only up to 90% aluminium hydroxide, the resultant aluminium sulphate will always contain iron sulphate. The aluminium sulphate will also contain water-insoluble substances if unreacted bauxite residues are not removed from the reaction solution. Examples of a product which includes both iron sulphate and water-soluble material include Boliden AVR, (Boliden being a trade mark), which contains about 7% Al in the form of $Al_2(SO_4)_3 \cdot 14$—$15 H_2O$, about 3% Fe in the form of $Fe_2(SO_4)_3 \cdot 9H_2O$ and about 2.5% water-insoluble mineral residues.

The reaction between the starting materials used is normally effected in a manner such that concentrated sulphuric acid and water are mixed in desired proportions in a reaction vessel, in which the temperature rises to about 130°C as a result of the heat developed during said reaction, whereafter aluminium-hydroxide material is carefully added to the hot acid mixture. When the aluminium hydroxide content of the aluminium-hydroxide material reacts with the sulphuric acid solution, large quantities of heat are developed, causing the resultant solution to reach boiling temperature and water vapour to be driven off. When the reaction has terminated, the solution is permitted to solidify, while cooling, in apparatus suitable therefor.

Serious limiting disadvantages with the process here described are that it is necessary to be extremely careful when metering the aluminium-hydroxide material to the aqueous acid mixture, because the solution tends to foam and can therefore readily boil over, if the aluminium-hydroxide material is charged in excessively large quantities per unit of time, and when the boiling temperature is reached. The foaming or frothing tendency is additionally strong, and thus particularly difficult, when bauxite is used as the aluminium-hydroxide containing material, owing to the fact that bauxite often contains organic substances which affect the surface tension. If the solution boils over, particularly serious technical interruptions of long duration may occur, which can result in substantial economic losses. If the aforementioned problems, dangers and disadvantages did not exist in present day methods, or could be substantially eliminated, the aluminium-hydroxide material could be added more quickly, and hence the manufacturing capacity of the plant would be much greater. In those cases where frothing is excessive, a foam-damping agent is often used in present times, to break up the foam. This method, however, has several serious disadvantages. Foam-damping agents are expensive, the addition of such agents is difficult to control and to meter exactly, and consequently foaming cannot be completely prevented. Furthermore, the foam-damping agent is a non-desirable constituent in the finished aluminium sulphate, and in some cases can create problems when using the aluminium sulphate.

A device for stirring liquids, by means of an addition of gas by partly or completely emulsifying the liquids is known from DE—C—1,026,283. The object is hereby to add large quantities of air (gas) to a liquid medium, such as a biological culture medium, whereby the air is introduced into the medium containing vessel close to its bottom via a distribution surface. The foam formed at the introduction of the air is eliminated by reintroducing it into the medium, optionally, after having been more or less destroyed.

Other methods of producing aluminium sulphate are suggested in efforts at avoiding the above mentioned problems in the digesting method. Thus, a solid-gas reaction process is disclosed in DE—C—286366, in which elevated pressure and temperature are used for converting solid aluminium hydroxide or oxide raw material into sulphate by reacting it with a gas containing air and sulphur dioxide under formation of sulphur trioxide, which will react with the solid material to form aluminium sulphate. It is also suggested to use other raw materials, such as disclosed in GB—A—333875, in which aluminium nitrate is used as raw material and treated with sulphuric acid, while supplying heat to support the reaction. Above alternative methods may avoid some of the problems concerned with the digestion process, but the methods are more complicated, energy consuming and costly than the conventional digesting methods.

In the method according to the present invention it has been surprisingly found possible to completely eliminate aluminium hydroxide digesting problems of the kind mentioned in the introduction and, at the same time, to accelerate the digesting process and increase the digesting capacity. The method also enables savings to be made on maintenance. In the conventional, batch-wise digesting method the material from which the apparatus used is made is subjected to stresses and loads, owing to the fact that both temperature and acid concentration vary rapidly in wide limits, resulting in expensive repairs to the apparatus. Such variations are completely avoided with the method according to the present invention.

The invention is in above object characterized by blowing a stream of gas through the aqueous sulphuric-acid solution, at least while adding the major part of the raw material in an amount sufficient to remove from the solution the water vapour formed during the exothermic digesting reaction, thereby substantially eliminating foaming of the mixture during the digesting process. Preferably the gas is air and is in a finely divided state when blown through the solution. It is further preferred to carry out the digesting process in an inverted conical vessel, wherein the gas is blown into said vessel through the apex thereof. Thus, in accordance with the invention a stream of gas is blown into the digestion solution at the same time as aluminium-hydroxide material is added. The injected and through-flowing gas has three functions, all of which co-operate in a surprisingly effective manner to fulfil one purpose, namely to ensure a more positive and more readily controlled method with a substantially higher manufacturing capacity than previously known methods. The gas thus has a stirring effect; it also breaks down the foam effectively and carries away the water vapour formed during the strong exothermic reaction. Although any gas suitable for the purpose can be used, readily available and innocuous gases such as air, nitrogen and carbon dioxide are preferred, although more oxidizing gases can be used if so desired, such as oxygen and oxygen-enriched air. When trivalent iron is present in the solution, gases which reduce trivalent iron to divalent iron should be avoided, since the presence of divalent iron in the solution is not desirable.

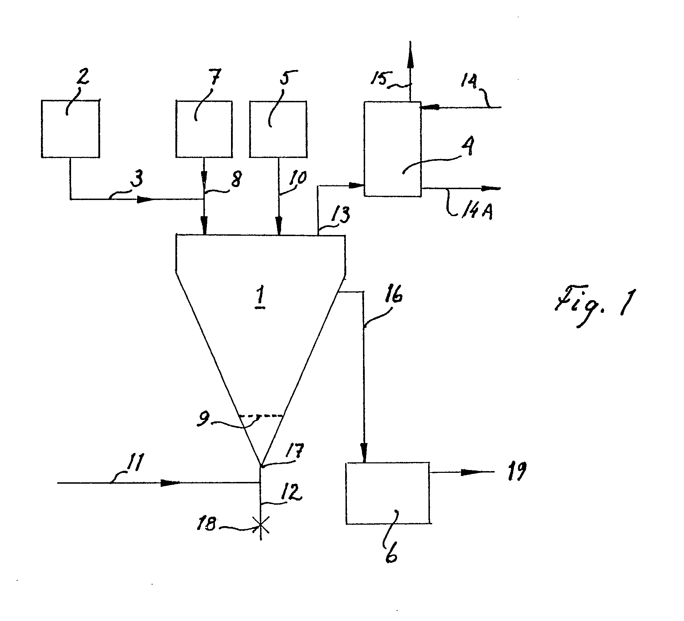

The method can, of course, be used with batch-wise digesting although it is particularly useful with continuous digesting. This enables, or in all events facilitates, a continuous process to be used, and thus enables the digesting of aluminium-hydroxide raw materials with sulphuric acid to produce aluminium-sulphate solutions to be rationalized. The invention will now be described in more detail with reference to the following non-limited examples and to the accompanying drawing, the single figure 1 of which illustrates a suitable plant for continuously digesting bauxite in accordance with the method of the invention. Shown in the drawing is a digesting conical vessel 1, a container for bauxite 2, a screw-feeder 3, a washing tower 4, a sulphuric-acid container 5, an after-reaction vessel 6 and a water supply 7. A perforated plate 9 may be arranged in the lower part of the vessel 1. When carrying out the method according to the invention in the illustrated plant, bauxite is fed from the container 2, through the screw feeder 3 via line 8 down into the upper part of the digesting vessel 1. The amount of bauxite fed through the screw-feeder can be regulated by changing the speed of said feeder. Water is added simultaneously with the bauxite through line 8, the water flow being measured by a flow meter in said line. To prevent large quantities of the dry, powderous bauxite from being blown away, water is added before the bauxite falls down into the vessel 1. Concentrated sulphuric acid is supplied from the tank or container 5, through line 10, to the upper part of the vessel 1. The amount of bauxite, water and sulphuric acid metered to the system is set as desired, prior to beginning the process. The temperature in the vessel 1 is registered by means of thermoelement (not shown). Air is blown into vessel 1 through lines 11, 12, the amount of air supplied being followed by a not shown flow meter. The waste reaction gases are taken out from vessel 1 through line 13, and are introduced to the lower end of tower 4, while washing water is introduced as indicated by line 14 into the upper part of the washing tower and withdrawn from the lower part as indicated by line 14A. Washed gases are released from the washing tower as indicated by arrow 15. The digesting vessel 1 is provided with valves for removing solution as indicated by line 16 from vessel 1 for further treatment of the solution in the manner desired. When the solution removed from vessel 1 has not completely reacted, the solution is lead, as indicated in the Figure, into an after-reaction vessel 6, from which produced solution is removed as indicated by arrow 19. The after-reaction vessel 6 is provided with a not shown steam element, which supplies heat to the solution, to prevent the temperature thereof from falling. The vessel 6 is also provided in the lower part adjacent the bottom thereof with not shown means through which air can be injected into the solution, to break down any foam formation in the after-reaction vessel 6. The conical vessel 1 is provided in the bottom thereof with an outlet 17, which is closed during operation by means of a valve 18 located in line 12. The valve 18 is only opened when emptying the conical vessel 1, through outlet 17 and line 12 subsequent to completing a batch or during continuous operation for discontinuously discharging coarse, unreacted material which is able to leave the conical vessel 1 through line 16.

With a metering rate for bauxite of between 2.5 and 9.8 kg/min, a plant of the illustrated kind requires an air flow varying between 0.9—

54 m³/hour. In the following Example 3, further details are given with respect to an advantageous method according to the invention practised in a plant of the kind illustrated in the Figure.

## Example 1

Batch-wise digesting of bauxite with sulphuric acid was carried out in a 5 liter glass beaker which was immersed in a glycerine bath at 118°C. A perforated copper coil for injecting air into the beaker was placed therein at a distance of 1—2 cms from the bottom thereof. Arranged above the copper coil was a glass agitator. Sulphuric acid and water were mixed in the beaker, the temperature rising to 84—86°C. An equivalent quantity of bauxite, 900 gram, was then added at a given, constant rate. As metering of the bauxite began, the temperature rose and quickly reached boiling temperature. A great deal of foam was formed. During the said metering process, air was blown through the solution. The following results were obtained:

| Bauxite dosage | Air-flow | Froth height |
|---|---|---|
| g/min | l/h | cm |
| 100 | 200 | 12—13 |
| 165 | 400 | 8—10 |
| 180 | 600 | 3—4 |

The test shows that it is possible to supply the necessary bauxite in a much shorter time when the air-flow is increased. Because of the high air-flow, the height of the foam is the lowest with the highest supply rate.

## Example 2

Digesting was effected continuously on a laboratory scale in a cone with the point thereof facing downwards, said cone having a volumetric capacity of 10 liters. Bauxite, sulphuric acid and water were introduced simultaneously and continuously into the cone. Metering was effected in a manner such that the average residence time of the reaction mass in the cone was about 10 minutes. Air was blown continuously into the cone through its apex. The air-flow was 3 m³/h. The foam formed was effectively broken down by the air-flow. The reaction solution was taken up continuously through a side pipe at the top of the cone. The solution was caused to run down to an after-reaction vessel, maintained at a temperature of 113—115°C. Arranged in the after-reaction vessel was a perforated copper coil, through which air was blown, when foam developed, for short periods. The foam was effectively broken down. The temperature in the cone was 120°C, and in the after-reaction vessel 116°C.

Samples of the solution were taken as the solution left the cone, where the average residence time was 10 minutes, and after 2 hours residence time in the after-reaction vessel. Analyses gave the following results:

| | Output solution from the cone | Solution from after-reaction vessel after 2 h |
|---|---|---|
| Al % | 6.0 | 6.4 |
| Fe % | 2.9 | 3.2 |
| Water insoluble % | 4.8 | 2.6 |
| Sulphuric acid deficit in percent | 1.0 | 1.2 |

The sulphuric acid deficit indicates the deviation in sulphate content, expressed as sulphuric acid, in relation to the stoichiometric conditions in $Al_2(SO_4)_3$ and $Fe_2(SO_4)_3$. A completely reacted solution should have an acid deficiency of about 1—2%.

The analyses show that the solution from the after-reaction vessel is completely reacted, and that the major part of the reaction had already taken place in the cone, despite the short residence time therein. The through-flow of air had completely broken down the foam formed and, as a result of the removal of heat thereby, enabled all the bauxite to be charged to the vessel in a very short time.

## Example 3

Continuous digesting was carried out for experimental purposes in a plant of the kind illustrated in Figure 1. Thus, the reaction was effected in the conical vessel 1 with the apex of the cone pointing downwardly, the cone angle being 43° and the volumetric capacity of the vessel in total being 400 liters. Bauxite was fed to the vessel by means of the screw feeder 3, and water from line 8 was passed into the same feed tube as that through which the bauxite was fed to the cone. The water moistened the bauxite, which was to advantage since otherwise the fine-grained material is readily blown away. Sulphuric acid was pumped into the cone through separate line 10.

Air was injected into the cone through the apex thereof, via lines 11, 12, and the amount of air was measured by a flow meter at line 11. Inserted in the lower part of the cone was a perforated, horizontal plate 9, to equilize the air distribution. The temperature of the reaction mixture was registered and monitored by means of a thermoelement and a writer. Departing reaction gases were washed with water in the washing tower 4. Reaction solution was tapped-off through line 16 at the top of the cone, and the reaction was completed in the after-reaction vessel 6, which was provided with steam element to prevent the temperature of the vessel from being lowered.

The reaction temperature in the majority of the tests made was 120—125°C.

In a series of tests, the so-called degree of volume utilization was determined, i.e. how much of the volume of the cone was taken up by solid or liquid substances. Remaining volume was taken up by foam and air. When metering 18 kg/min of bauxite+sulphuric acid+water the degree of volume utilization was, for example, 69%. It could be shown that said degree of volume utilization, with good approximation, is a rectilinear function of the air-flow, and that said degree of volume utilization decreases with increasing metering.

The following relationships were obtained between the degree of volume utilization and the air-flow with different metered quantities of bauxite:

| Metered quantities of bauxite kg/min | Volume utilization % |
| --- | --- |
| 4.5 | 4.9×air-flow (m³/h) |
| 6.7 | 2.5×air-flow (m³/h) |
| 9.7 | 1.2×air-flow (m³/h) |

The maximum volume utilized was about 75%.

In one experiment the following quantities were metered to the cone, 9.7 kg bauxite/min, 16.3 kg sulphuric acid/min and 12.5 kg water/min. The flow of air through the cone was 45 m³/h.

After metering the said quantities for 11 minutes a sample of the solution in the cone was taken, which showed that the sulphuric acid surplus was 5.8%. Following analyses were then made on samples taken at varying reaction times in the after-reaction vessel.

| Time, minutes | Sulphuric acid deficiency % |
| --- | --- |
| 30 | −1.4 |
| 60 | −0.4 |
| 90 | 0.1 |
| 120 | 0.5 |
| 150 | 0.8 |

Thus there was obtained in the after-reaction vessel a solution which, after crystallization, is fully comparable with products produced in accordance with conventional methods.

If the air-flow through the cone is too low during the digesting process, the solution will violently boil over. When the rate at which bauxite is charged to the cone increases, the requisite amount of air per kg of bauxite also increases. With, for example, 50 kg bauxite/min, the requisite air-flow is about 0.3 m³/kg bauxite, which gives a total air-flow of about 930 m³/h. With 100 kg bauxite/min, the corresponding values are about 0.6 m³ air/kg bauxite and 3600 m³ air/h respectively. These values have been obtained when using a cone having a volumetric capacity of 400 liters. With a larger cone the retention time increases, which means that smaller quantities of air are required. In a plant of the kind illustrated in the Figure, a cone having a volumetric capacity of about 2 m³ can be used for digesting about 50 kg bauxite/min. The requisite air-flow when bauxite is metered at 50 kg/min normally lies between 200 and 900 m³/h with a retention time of about 8 minutes.

## Claims

1. A method of producing an aluminium-sulphate solution, in which an aluminium-hydroxide containing raw material, particularly products from the Bayer process or bauxite, is admixed with a sulphuric-acid water solution while digesting the raw material, to form an aluminium sulphate solution, characterized in blowing a stream of gas through the aqueous sulphuric-acid solution, at least while adding the major part of the raw material in an amount sufficient to remove from the solution the water vapour formed during the exothermic digesting reaction, thereby substantially eliminating foaming of the mixture during the digesting process.

2. A method according to claim 1, characterized in that the air is in a finely divided state when blown through the solution.

3. A method according to any one of the preceding claims, characterized in that the digesting process is effected in an inverted conical vessel, and wherein the gas is blown into said vessel through the apex thereof.

## Patentansprüche

1. Verfahren zur Herstellung einer Aluminiumsulfatlösung, bei dem ein aluminiumhydroxidhaltiges Rohmaterial, besonders ein Produkt aus dem Bayer-Verfahren oder Bauxit, mit einer Schwefelsäure-Wasserlösung unter Aufschluß des Rohmaterials und Bildung einer Aluminiumsulfatlösung vermischt wird, dadurch gekennzeichnet, daß man einen Gasstrom durch die wäßrige Schwefelsäurelösung wenigstens während der Zugabe des Hauptteils des Rohmaterials in einer ausreichenden Menge hindurchbläst, um aus der Lösung den während der exothermen Aufschlußreaktion gebildeten Wasserdampf zu entfernen, und so ein Schäumen des Gemisches während des Aufschlußverfahrens im wesentlichen ausschaltet.

2. Verfahren nach Anspruch 1, dadurch gekennzeichnet, daß die Luft in fein verteiltem Zustand vorliegt, wenn sie durch die Lösung geblasen wird.

3. Verfahren nach einem der vorausgehenden Ansprüche, dadurch gekennzeichnet, daß das Aufschlußverfahren in einem Behälter in der Form eines umgekehrten Kegels durchgeführt wird, wobei das Gas in den Behälter durch seine Spitze eingeblasen wird.

**Revendications**

1. Procédé de production d'une solution de sulfate d'aluminium, dans lequel on mélange une matière première contenant de l'hydroxyde d'aluminium, en particulier des produits issus du procédé Bayer ou de la bauxite, avec une solution aqueuse d'acide sulfurique, tout en faisant digérer la matière première, pour former une solution de sulfate d'aluminium, caractérisé par l'insufflation d'un courant gazeux à travers la solution aqueuse d'acide sulfurique, au moins tandis que l'on ajoute la majeure partie de la matière première, en une quantité suffisante pour séparer de la solution, la vapeur d'eau formée durant la réaction de digestion exothermique, en éliminant ainsi pratiquement totalement le moussage du mélange durant le processus de digestion.

2. Procédé suivant la revendication 1, caractérisé en ce que l'air est à l'état de fine subdivision lors de son insufflation à travers la solution.

3. Procédé suivant l'une ou l'autre des revendications précédentes, caractérisé en ce que le processus de digestion est réalisé dans un récipient conique inversé, et le gaz est insufflé dans ce récipient à travers la pointe de celui-ci.

Fig. 1